# EUROPÄISCHE PATENTANMELDUNG

(11) **EP 4 530 040 A1**
(43) Veröffentlichungstag der Anmeldung: **02.04.2025**
(21) Anmeldenummer: 24202753.0
(22) Anmeldetag: 26.09.2024
(51) Int. Cl.: B28B 11/24, F27B 9/10, F27B 9/24, F26B 23/06, F26B 23/02, F26B 21/10, F26B 21/04, F26B 15/18, F26B 3/06

(54) **HÄRTEOFENANLAGE FÜR BAUSTOFFE**

(30) Priorität: 28.09.2023 DE 202023105666 U
(71) Anmelder: Bernd Münstermann GmbH & Co. KG, 48291 Telgte (DE)
(72) Erfinder: Hautkappe, Christian, 44625 Herne (DE); Oster, Georg, 49479 Ibbenbüren (DE)
(74) Vertreter: Schulze Horn, Kathrin

(57) **Zusammenfassung**

Härteofenanlage für Baustoffe, insbesondere bindemittelgebundene Baustoffe, insbesondere zum Trocknen und/oder Aushärten bindemittelgebundener Baustoffe, insbesondere Mineralwolle enthaltende Baustoffe, mit wenigstens einem, mit wenigstens einer Heizvorrichtung beheizbaren Härteofen (11), mit insbesondere wenigstens einer Härteofenzone, zum Aushärten des Baustoffs, und mit wenigstens einem Fördermittel zum Transportieren des Baustoffs durch den Härteofen (11), **dadurch gekennzeichnet,** dass der wenigstens eine Härteofen (11), insbesondere wenigstens eine Härteofenzone, wenigstens eine elektrische Heizvorrichtung aufweist.

Außerdem betrifft die Erfindung ein Verfahren zum Betreiben einer solchen Härteofenanlage.

## Beschreibung

Die Erfindung betrifft eine Härteofenanlage gemäß dem Oberbegriff des Anspruchs 1. Des Weiteren betrifft die Erfindung ein Verfahren zum Betreiben einer Härteofenanlage mit den Merkmalen des Anspruchs 10.

Härteofenanlagen, wie insbesondere die hier beschriebenen, werden insbesondere bei der Produktion von Baustoffen eingesetzt. Konkret handelt es sich in der Regel um Baustoffe, die im Rahmen der Herstellung wenigstens einen Trocknungsschritt oder Aushärtungsschritt durchlaufen müssen. Statt Baustoff lassen sich gegebenenfalls hier auch die Begriffe Material und/oder Produkt verwenden.

Beispielsweise werden plattenförmige Materialien aus Fasern oder faserförmigem Material hergestellt, wie beispielsweise aus Mineralwolle, Glasfaser und ähnlichem. Diese Materialien werden dann typischerweise mit einem Bindemittel verbunden, wie beispielsweise einem Klebstoff. Typischerweise wird das mit dem Bindemittel versehene Material in einem sogenannten Härteofen erhitzt, um das Bindemittel aushärten zu lassen und/oder zu trocknen.

Um die Trocknungswirkung beziehungsweise das Aushärten ermöglichen zu können, ist insbesondere ein Innenraum des Härteofens aufzuheizen. Hierzu ist wenigstens eine Heizvorrichtung vorgesehen. Bekannt ist es dabei, die Heizvorrichtung durch Verbrennung von Gas zu beheizen.

Dabei treten allerdings Nachteile auf. Zum einen ist der Energieträger Gas nicht immer in unbegrenzter oder zumindest hinreichender Menge preisgünstig verfügbar. Zum anderen kommt es typischerweise zu Ausdünstungen aus den herzustellen Baustoffen. In Verbindung mit offenem Feuer im Ofen müssen unerwünschte Entzündungen bis hin zu Explosionen befürchtet werden, wenn beispielsweise die Ofenatmosphäre nicht hinreichend kontrolliert werden kann.

Es ist daher eine Aufgabe der Erfindung, die beschriebenen Nachteile zu beseitigen. Insbesondere soll die Beheizung unabhängiger von den bestehenden Energieträgern werden. Auch sollen möglichst Risiken beim Betrieb reduziert werden.

Die beschriebene Aufgabe wird insbesondere gelöst durch eine Härteofenanlage mit den Merkmalen des Anspruchs. Es handelt sich um eine Härteofenanlage für Baustoffe, insbesondere bindemittelgebundene Baustoffe. Die Härteofenanlage ist insbesondere zum Trocknen und/oder Aushärten bindemittelgebundener Baustoffe, insbesondere Mineralwolle enthaltende Baustoffe, vorgesehen. Die Baustoffe können auch als Material und/oder Produkte bezeichnet werden. Die Härteofenanlage weist wenigstens einen, mit wenigstens einer Heizvorrichtung beheizbaren Härteofen zum Aushärten des Baustoffs auf. Der Härteofen kann wenigstens eine Härteofenzone aufweisen, vorzugsweise mehrere Härteofenzonen. Außerdem ist wenigstens ein Fördermittel zum Transportieren des Baustoffs durch den Härteofen vorgesehen. Die Härteofenanlage zeichnet sich dadurch aus, dass der wenigstens eine Härteofen, insbesondere wenigstens eine Härteofenzone, wenigstens eine elektrische Heizvorrichtung aufweist. Eine elektrische Heizvorrichtung, insbesondere wenigstens eine Härteofenzone, ist mit elektrischem Strom betreibbar. Elektrischer Strom ist grundsätzlich in großem Umfang und/oder auf einfache Weise verfügbar. Insbesondere kann der Strom auch aus regenerativen Quellen bereitgestellt werden, also vorzugsweise Photovoltaik und/oder Windkraft. Eine elektrische Beheizung sorgt insbesondere für einen sicheren und/gut steuerbaren Betrieb. Auch lassen sich so fossile Energieträger einsparen.

Vorzugsweise sind mehrere Heizvorrichtungen vorgesehen. Damit kann eine alternative oder kombinierte Beheizung erfolgen. Mehrere Heizvorrichtungen lassen sich zusammen betreiben, um die Leistung insgesamt zu erhöhen oder die Leistung je Heizvorrichtung zu reduzieren. Auch kann eine größere Ausfallsicherheit erreicht werden.

Der Härteofen weist insbesondere ausschließlich elektrische Heizvorrichtungen auf. Vorzugsweise ist der Härteofen zumindest im Wesentlichen vollständig elektrisch beheizbar. Damit ist ein Betrieb mit einfach steuerbarer und/oder sicherer Energieversorgung möglich. Offenes Feuer kann damit vermieden werden.

Insbesondere weist die elektrische Heizvorrichtung wenigstens ein elektrisches Heizregister auf, vorzugsweise mehrere elektrische Heizregister. Durch Kombination mehrerer Heizregister kann eine höhere Leistung als mit einzelnen erreicht werden. Die Ausfallsicherheit kann ebenfalls erhöht werden.

Es ist insbesondere eine nichtelektrische Heizvorrichtung vorgesehen, insbesondere eine Gasheizvorrichtung. Die nichtelektrische Heizvorrichtung ist vorzugsweise zusätzlich zur elektrischen Heizvorrichtung vorgesehen. Damit kann ein ergänzender oder alternativer Betrieb mit verschiedenen Energiequellen erreicht werden.

Die wenigstens eine nichtelektrische Heizvorrichtung arbeitet bevorzugt mit Verbrennung wenigstens eines brennbaren Stoffes. Weiter vorzugsweise sind Gas und/oder Holz und/oder Kohle und/oder Wasserstoff als brennbare Stoffe vorgesehen. Diese Energiequellen sind in der Regel gut speicherbar und/oder zu bevorraten. Damit kann eine Grundlast und/oder ein ergänzender Betrieb erreicht werden.

Insbesondere weist die wenigstens eine Heizvorrichtung wenigstens ein Heizelement auf, wobei die wenigstens eine Heizvorrichtung insbesondere mehrere Heizelemente aufweist. Mehrere Heizelemente können vorzugsweise dieselbe Beheizungsart aufweisen, vorzugsweise alle Heizelemente einer Heizvorrichtung. Damit lassen sich unterschiedliche Kombinationen zur Beheizung erreichen.

Als Fördermittel für das Material und/oder Produkt ist vorzugsweise wenigstens ein Förderband vorgesehen. Weiter vorzugsweise sind mehrere Förderbänder vorgesehen, wobei diese insbesondere parallel zueinander angeordnet sind. Die Kombination von Förderbändern kann eine gezielte Förderung des Materials und/oder Produkts sicherstellen.

Es ist insbesondere wenigstens ein Gebläse, vorzugsweise wenigstens ein Ventilator, zur Zuführung eines erhitzten Gases, insbesondere Luft, in den Härteofen vorgesehen. Vorzugsweise ist die wenigstens eine Heizvorrichtung zum Heizen des Gases vorgesehen. Auf diese Weise wird eine Beheizung des Härteofens erreicht.

Die eingangs beschriebene Aufgabe wird außerdem gelöst durch ein Verfahren mit den Merkmalen des Anspruchs 10 zum Betreiben einer Härteofenanlage, insbesondere einer Härteofenanlage nach den obigen Beschreibungen. Die Härteofenanlage weist dabei wenigstens einen Härteofen auf, mit dem wenigstens ein Baustoff, insbesondere bindemittelgebundener Baustoff, ausgehärtet und/oder getrocknet wird. Der Baustoff wird vorzugsweise mittels eines Fördermittels durch den Härteofen transportiert, wobei der Härteofen durch wenigstens eine Heizvorrichtung beheizt wird. Das Verfahren zeichnet sich dadurch aus, dass der Härteofen mittels wenigstens einer Heizvorrichtung elektrisch beheizt wird. Eine elektrische Heizvorrichtung ist mit elektrischem Strom betreibbar. Elektrischer Strom ist grundsätzlich in großem Umfang und/oder auf einfache Weise verfügbar. Insbesondere kann der Strom auch aus regenerativen Quellen bereitgestellt werden, also vorzugsweise Photovoltaik und/oder Windkraft. Eine elektrische Beheizung sorgt insbesondere für einen sicheren und/gut steuerbaren Betrieb.

Der Härteofen wird insbesondere vollständig elektrisch beheizt. Ein rein elektrischer Betrieb sorgt insbesondere für einen sicheren Betrieb nur mit elektrischem Strom.

Der Härteofen wird vorzugsweise zumindest teilweise nichtelektrisch beheizt und/oder ist zumindest teilweise nichtelektrisch beheizbar. Damit lassen sich möglicherweise unterschiedliche Beheizungsarten kombinieren.

Vorzugsweise werden die Heizvorrichtungen und/oder mehrere Heizelemente einer Heizvorrichtung unabhängig voneinander betrieben beziehungsweise können vorzugsweise unabhängig voneinander betrieben werden. Damit kann eine Ausfallsicherheit erreicht werden. Auch lassen sich Belastungen der einzelnen Heizvorrichtungen reduzieren.

Der Baustoff und/oder das Material wird insbesondere als flaches und/oder bahnförmiges Material durch den Härteofen transportiert. Die Form eignet sich damit vorzugsweise besonders für diese Art der Behandlung.

Denkbar sind auch Anordnungen von Heizvorrichtungen und/oder Heizregistern außerhalb der eigentlichen Heizzonen und/oder Härteöfen. Dies kann für weitere Bearbeitungsschritte vorgesehen sein. Beispielsweise kann dies zu Trocknungszwecken beziehungsweise zu Vor- und/oder Nachbehandlung der Materialien dienen. Auch lassen sich externe Umlufteinheiten und/oder Ventilatoren außerhalb der eigentlichen Härteöfen und/oder Heizzonen vorsehen.

Bevorzugte Ausführungsbeispiele der Erfindung werden im Folgenden anhand der Figuren der Zeichnung näher beschrieben. In dieser zeigen:
- Fig. 1: eine Seitenansicht einer Härteofenanlage mit elektrischem Betrieb,
- Fig. 2: eine perspektivische Ansicht der Härteofenanlage gemäß Fig. 1,
- Fig. 3: eine Seitenansicht einer Härteofenanlage mit elektrischem Betrieb und Gasbetrieb,
- Fig. 4: eine perspektivische Ansicht der Härteofenanlage der Fig. 3,
- Fig. 5: eine Schemazeichnung zum Betrieb der Härteofenanlage der Fig. 1 und 2, und
- Fig. 6: eine Schemazeichnung zum Betrieb der Härteofenanlage der Fig. 3 und 4.

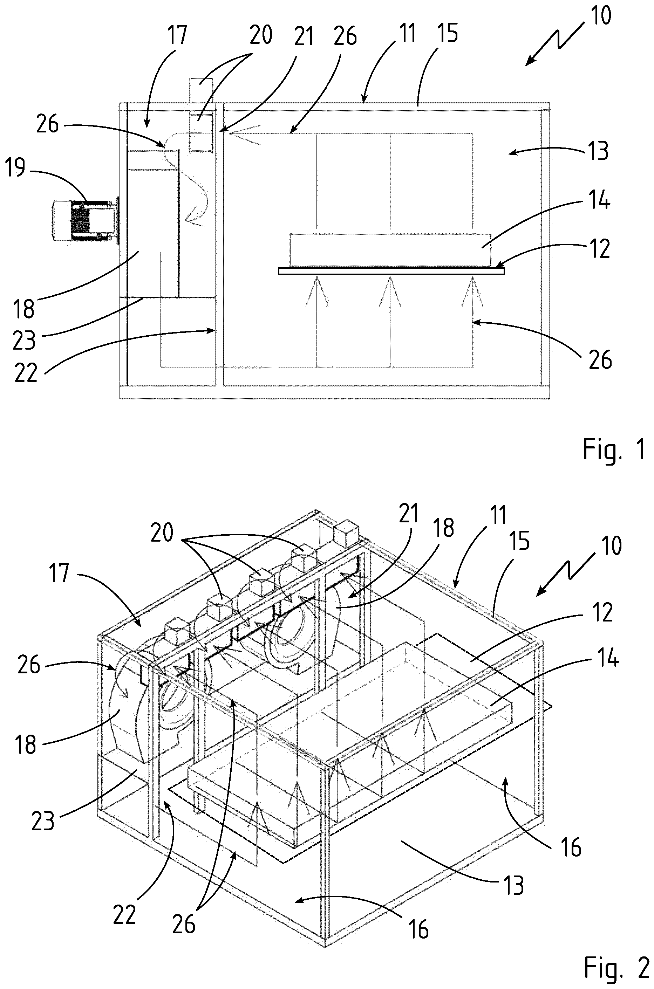

In der Fig. 1 ist eine Härteofenanlage 10 in einer seitlichen Schnittansicht gezeigt. Die Fig. 2 zeigt eine perspektivische Darstellung dieser Härteofenanlage 10.

In den Figuren sind hier die wesentlichen Bestandteile der Härteofenanlage 10 gezeigt. Zum einen handelt sich um einen Härteofen 11 und zum anderen um ein Förderband 12. Das Förderband 12 als Teil der Härteofenanlage 10 verläuft durch einen Innenraum 13 des hier gezeigten Härteofens 11. Je nach Ausbildung der Härteofenanlage 10 können auch mehrere Härteöfen oder andere Komponenten hintereinander vom selben Förderband 12 durchlaufen werden.

Das Förderband 12 dient dazu, einen Baustoff beziehungsweise ein Produkt insbesondere als Material 14 insbesondere durch den wenigstens einen Härteofen 11 zu transportieren. Es können dazu auch mehrere Förderbänder 12 oder abschnittsweise getrennte Förderbänder oder andere Transportvorrichtungen vorgesehen sein.

Der Härteofen 11 weist ein Gehäuse 15 auf. Das Gehäuse 15 umgibt insbesondere den Innenraum 13. Um das Produkt oder Material 14 mittels des Förderbandes 12 in den Härteofen 11 hinein und aus diesem wieder heraus transportieren zu können, weist der Härteofen zwei Öffnungen 16 auf. Diese Öffnungen 16 sind dazu insbesondere gegenüberliegend angeordnet. Durch diese beiden Öffnungen 16 verläuft das Förderband 12 hindurch und damit gleichzeitig auch durch den Innenraum 13 des Härteofens 11. Auf diese Weise kann das Produkt beziehungsweise Material 14 durch den Härteofen 11 hindurch transportiert werden.

Der Härteofen 11 weist in diesem Fall eine Umluftkammer 17 auf. Die Umluftkammer 17 dient dazu, einen Luftstrom durch den Innenraum 13 des Härteofens 11 sicherstellen zu können. Dazu sind im vorliegenden Fall Gebläse beziehungsweise Ventilatoren 18 vorgesehen. Diese werden mittels Antrieben 19 angetrieben. Es kann sich beispielsweise bei den Antrieben 19 vorzugsweise um elektrische Antriebe, wie insbesondere Elektromotoren handeln.

Mittels der Ventilatoren 18 wird durch Ansaugen im oberen Bereich des Härteofens 11 und Zuführen im unteren Bereich des Härteofens 11 für einen umlaufenden Luftstrom 26 im Innenraum 13 gesorgt. Der Luftstrom 26 ist zur Veranschaulichung hier mit Pfeilen in den Figuren skizziert. Der Luftstrom 26 ist damit als Umluftstrom ausgebildet. Die Luftströmung kann auch in umgekehrter Richtung vorgesehen sein. Dann verläuft der Luftstrom 26 sozusagen entgegengesetzt der Pfeilrichtung. Dazu kann das Ansaugen im unteren Bereich des Härteofens 11 und das Zuführen im oberen Bereich des Härteofens 11 erfolgen.

Im Ausführungsbeispiel der Fig. 1 und Fig. 2 sind außerdem elektrische Heizregister 20 vorgesehen. Diese sind hier im Bereich der Umluftkammer 17 angeordnet. In diesem Fall befinden sich die Heizregister 20 im oberen Bereich der Umluftkammer 17.

Die aus dem Innenraum 13 des Härteofens 11 oben angesaugte Luft beziehungsweise Gasmischung wird über das wenigstens eine elektrische Heizregister 20 erhitzt. Des Weiteren wird die Luft über die Ventilatoren 18 in den unteren Bereich der Umluftkammer 17 gefördert. Dort tritt sie wieder in den Innenraum 13 des Härteofens 11 ein.

Dementsprechend ist eine obere Umluftöffnung 21 zur Verbindung des Innenraums 13 mit der Umluftkammer 17 vorgesehen. Eine untere Umluftöffnung 22 dient hier zur Rückführung der Luft beziehungsweise der Gase in den Innenraum 13. Um dementsprechend einen Luftstrom mittels des wenigstens einen Ventilators 18 aufbauen zu können, ist hier eine Trennwand 23 innerhalb der Umluftkammer 17 vorgesehen. Diese dient dazu, den Luftstrom definiert leiten zu können.

Die aus dem Innenraum 13 abgesaugte Luft beziehungsweise darin befindliche Gase werden dementsprechend über die elektrischen Heizregister 20 angesaugt. Sie lassen sich damit erhitzen. Mittels des wenigstens einen Ventilators 18 erfolgt dann ein Weitertransport zurück in den Innenraum 13. Indem die erhitzten Gase von unterhalb des Förderbandes 12 auf das Produkt beziehungsweise Material 14 treffen, kommt es zu einer Aushärtung beziehungsweise Trocknung des Materials 14. Bei anders geführter Luftströmung kann der Luftstrom 26 naturgemäß auch aus anderen Richtungen auf das Material treffen. Beispielsweise kann bei gegenüber den Zeichnungen umgekehrter Luftströmung die Luft von oberhalb auf das Material treffen.

Dazu ist das Förderband 12 typischerweise mit Durchbrüchen beziehungsweise Öffnungen versehen, sodass die Gase durch das Förderband 12 hindurchtreten können. Das Material 14, insbesondere ein Baustoff, was bevorzugt ebenfalls eine poröse Struktur auf. Dadurch kann das erhitzte Gas dieses Material 14 zumindest teilweise durchtreten. Dadurch wird ein besonders guter Trocknungs- und/oder Aushärtungseffekt erreicht.

Durch Betrieb des Härteofens 11 mittels elektrischer Heizregister 20 wird eine verbesserte Steuerbarkeit im Betrieb erreicht. Die Heizleistung lässt sich schnell und/oder genau regeln. Außerdem lassen sich durch einen elektrischen Betrieb auch in besonders vorteilhafter Weise regenerative Energien nutzen, wie beispielsweise Solarstrom und/oder Windenergie. Diese sind beispielsweise tagsüber gut verfügbar. So lassen sich hier entsprechende Verfügbarkeiten elektrischer Energie in besonderer Weise verfügbar machen und auch nutzen.

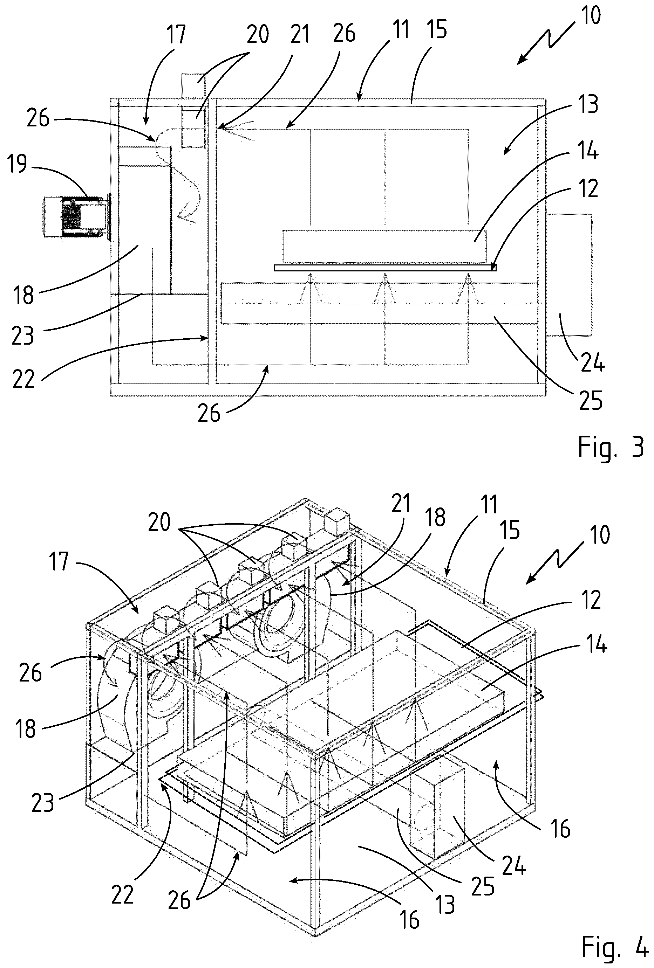

In den Fig. 3 und 4 ist ein weiteres Ausführungsbeispiel der Erfindung gezeigt.

Im Wesentlichen entspricht die Funktionsweise dem Ausführungsbeispiel der Fig. 1 und 2. Ebenfalls ist ein Umluftbetrieb mit elektrischer Beheizung im Härteofen 11 vorgesehen. Hierzu sind die entsprechenden Komponenten wie oben beschrieben identisch markiert.

Zusätzlich zum elektrischen Heizungsbetrieb des ersten Ausführungsbeispiels der Fig. 1 und 2 ist aber zusätzlich eine weitere Wärmequelle vorgesehen. In diesem Ausführungsbeispiel ist zusätzlich ein Gasbrenner 24 als vorgesehen.

Dieser Gasbrenner 24 ist in diesem Beispiel außerhalb des Gehäuses 15 angeordnet. Zum Transport der Wärme in den Innenraum 13 des Härteofens 11 ist hier ein Heizrohr 25 eingebracht. Dieses Heizrohr 25 verläuft unterhalb des Förderbandes 12. Auf diese Weise kann das erhitzte Gas beziehungsweise die erhitzte Luft von unterhalb des Materials 14 dieses entsprechend erhitzen.

Eine Kombination verschiedener Heizsysteme kann sinnvoll sein, um verschiedene Energieträger zu nutzen, wie beispielsweise hier elektrische Energie einerseits und chemische Energie aus Gas andererseits. Ein alternativer Betrieb wie auch ein kombinierter Betrieb mit verschiedenen Wärmequellen ist damit denkbar.

So kann beispielsweise der wenigstens eine Gasbrenner 24 als Grundlastheizer betrieben werden. Mittels der elektrischen Heizregister 20 kann eine schnelle Nachregelung der Temperatur erfolgen. Auch umgekehrt kann ein entsprechender Betrieb vorgesehen sein. Bei Verfügbarkeit großer Mengen elektrische Energie kann ein primärer Betrieb mittels in der elektrischen Heizregister 20 erfolgen, mithin als Grundlastheizer. Der Gasbrenner 24 kann dann gegebenenfalls zugeschaltet werden, wenn eine weitere Wärmequelle benötigt wird.

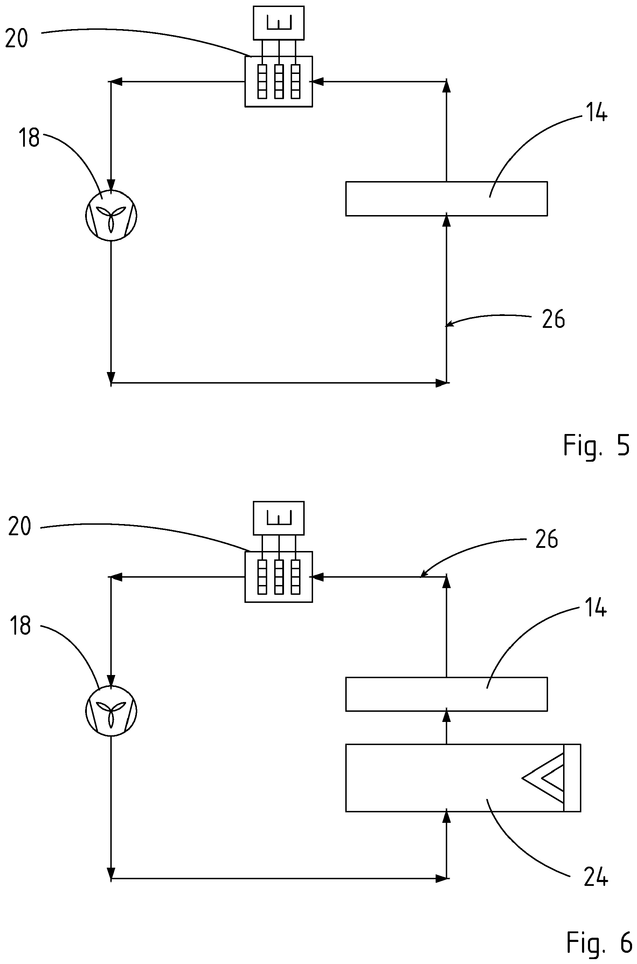

In den Fig. 5 und 6 sind Prinzipskizzen zur Funktionsweise der beiden Beheizungsarten gezeigt.

In der Fig. 5 ist dabei die Beheizungsart nur mit elektrischen Heizregistern 20 gemäß des Ausführungsbeispiels der Fig. 1 und 2 dargestellt. Hier wird der Umluftbetrieb mittels der umlaufenden Pfeile skizziert. Die elektrischen Heizregister 20 mit dem Ventilator 18 und dem Material 14 sind darin dargestellt.

In der Fig. 6 ist dementsprechend zusätzlich für den Betrieb mit einem Verbrennungsofen auch hier der Gasbrenner 24 gezeigt. Dieser befindet sich hier in der Skizze unterhalb des Materials 14. Somit kann die aufsteigende heiße Luft beziehungsweise das heiße Gas direkt von unterhalb des Materials 14 zugeführt werden. Durch den Umluftbetrieb wird auch hier für eine kontinuierliche Durchmischung und Zuführung heißer Luft gesorgt.

Insgesamt kann der Umluftbetrieb auch dazu dienen, dass ausgasende Stoffe aus dem Ofen abgeführt werden können. So kann dafür gesorgt werden, dass explosive Mischungen im Innenraum 13 des Härteofens 11 wirksam vermieden werden. Es kann dementsprechend Frischluft zugeführt werden, um eventuelle explosive Konzentrationen brennbarer Gase zu reduzieren.

Die Anordnung der Komponenten der Anlagen ist hier als exemplarisch anzusehen. So lassen sich Teile der Luftführung auch außerhalb der eigentlichen Härteöfen 13 oder Heizzonen anordnen. Beispielsweise können die Ventilatoren 18 und/oder Heizvorrichtungen beziehungsweise Heizregister außerhalb des eigentlichen Ofens 13 angeordnet sein. In einem solchen Fall können gegebenenfalls Luftführungskanäle erforderlich werden.

Ein entsprechendes Verfahren zum Betreiben einer Härteofenanlage ist ebenfalls auf Basis der beschriebenen Ausführungsbeispiele möglich.

Hierbei wird eine elektrische Beheizung des Härteofens 13 vorgesehen. Dazu sind insbesondere die elektrischen Heizregister 20 vorgesehen. Es ist eine zusätzliche nichtelektrische Beheizung möglich. Hierzu können insbesondere Gasheizer 24 verwendet werden.

Ein Betrieb der einzelnen Heizelemente beziehungsweise Heizvorrichtungen kann gekoppelt oder unabhängig voneinander erfolgen. So lassen sich die elektrischen Heizregister 20 jeweils unabhängig voneinander betreiben, sofern mehrere Heizregister 20 vorhanden sind. Auch kann ein kombinierter und/oder unabhängiger Betrieb elektrischen Heizregister 20 und der Gasheizvorrichtung 24 erfolgen. Diese Weise lassen sich die Vorteile der unterschiedlichen Beheizungsarten nutzen.

### Bezugszeichenliste

- 10: Härteofenanlage
- 11: Härteofen
- 12: Förderband
- 13: Innenraum
- 14: Material
- 15: Gehäuse
- 16: Öffnung
- 17: Umluftkammer
- 18: Ventilator
- 19: Antrieb
- 20: elektrisches Heizregister
- 21: Umluftöffnung
- 22: Umluftöffnung
- 23: Trennwand
- 24: Gasbrenner
- 25: Heizrohr
- 26: Luftstrom

## Patentansprüche

1. Härteofenanlage für Baustoffe, insbesondere bindemittelgebundene Baustoffe, insbesondere zum Trocknen und/oder Aushärten bindemittelgebundener Baustoffe, insbesondere Mineralwolle enthaltende Baustoffe, mit wenigstens einem, mit wenigstens einer Heizvorrichtung beheizbaren Härteofen (11), mit insbesondere wenigstens einer Härteofenzone, zum Aushärten des Baustoffs, und mit wenigstens einem Fördermittel zum Transportieren des Baustoffs durch den Härteofen (11), **dadurch gekennzeichnet, dass** der wenigstens eine Härteofen (11), insbesondere wenigstens eine Härteofenzone, wenigstens eine elektrische Heizvorrichtung aufweist.

2. Härteofenanlage nach Anspruch 1, **dadurch gekennzeichnet, dass** mehrere Heizvorrichtungen vorgesehen sind.

3. Härteofenanlage nach Anspruch 1 oder 2, **dadurch gekennzeichnet, dass** der Härteofen (11) ausschließlich elektrische Heizvorrichtungen aufweist und/oder dass der Härteofen (11) zumindest im Wesentlichen vollständig elektrisch beheizbar ist.

4. Härteofenanlage nach einem der vorhergehenden Ansprüche 1 bis 3, **dadurch gekennzeichnet, dass** die elektrische Heizvorrichtung wenigstens ein elektrisches Heizregister (20) aufweist, vorzugsweise mehrere elektrische Heizregister (20).

5. Härteofenanlage nach einem der vorhergehenden Ansprüche, **dadurch gekennzeichnet, dass** wenigstens eine nichtelektrische Heizvorrichtung vorgesehen ist, insbesondere eine Gasheizvorrichtung (24).

6. Härteofenanlage nach einem der vorhergehenden Ansprüche, **dadurch gekennzeichnet, dass** die wenigstens eine nichtelektrische Heizvorrichtung mit Verbrennung wenigstens eines brennbaren Stoffes arbeitet, vorzugsweise mit Gas und/oder Holz und/oder Kohle und/oder Wasserstoff als brennbaren Stoff.

7. Härteofenanlage nach einem der vorhergehenden Ansprüche, **dadurch gekennzeichnet, dass** die wenigstens eine Heizvorrichtung wenigstens ein Heizelement aufweist, wobei die wenigstens eine Heizvorrichtung insbesondere mehrere Heizelemente aufweist, wobei mehrere Heizelemente vorzugsweise dieselbe Beheizungsart aufweisen, vorzugsweise alle Heizelemente einer Heizvorrichtung.

8. Härteofenanlage nach einem der vorhergehenden Ansprüche, **dadurch gekennzeichnet, dass** als Fördermittel wenigstens ein Förderband (12) vorgesehen ist, wobei vorzugsweise mehrere Förderbänder (12) vorgesehen sind, die insbesondere parallel zueinander angeordnet sind.

9. Härteofenanlage nach einem der vorhergehenden Ansprüche, **dadurch gekennzeichnet, dass** wenigstens ein Gebläse, vorzugsweise Ventilator (18), zur Zuführung eines erhitzten Gases, insbesondere Luft, in den Härteofen vorgesehen ist, wobei vorzugsweise die wenigstens eine Heizvorrichtung zum Heizen des Gases vorgesehen ist.

10. Verfahren zum Betreiben einer Härteofenanlage, insbesondere einer Härteofenanlage (10) nach einem der vorhergehenden Ansprüche, wobei die Härteofenanlage (10) wenigstens einen Härteofen (11), mit insbesondere wenigstens einer Härteofenzone, aufweist, mit dem wenigstens ein Baustoff, insbesondere bindemittelgebundener Baustoff, ausgehärtet und/oder getrocknet wird, wobei der Baustoff vorzugsweise mittels eines Fördermittels durch den Härteofen (11) transportiert wird, wobei der Härteofen durch wenigstens eine Heizvorrichtung beheizt wird, **dadurch gekennzeichnet, dass** der Härteofen (11), insbesondere wenigstens eine Härteofenzone, mittels wenigstens einer Heizvorrichtung elektrisch beheizt wird.

11. Verfahren nach Anspruch 10, **dadurch gekennzeichnet, dass** der Härteofen (11) vollständig elektrisch beheizt wird.

12. Verfahren nach Anspruch 10, **dadurch gekennzeichnet, dass** der Härteofen (11) zumindest teilweise nichtelektrisch beheizt wird und/oder beheizbar ist.

13. Verfahren nach einem der Ansprüche 10 bis 12, **dadurch gekennzeichnet, dass** die Heizvorrichtungen und/oder mehrere Heizelemente einer Heizvorrichtung unabhängig voneinander betrieben werden können, vorzugsweise unabhängig voneinander betrieben werden.

14. Verfahren nach einem der Ansprüche 10 bis 13, **dadurch gekennzeichnet, dass** der Baustoff als flaches und/oder bahnförmiges Material (14) durch den Härteofen (11) transportiert wird.
